# EUROPEAN PATENT APPLICATION

(11) **EP 3 252 529 A1**
(43) Date of publication of application: **06.12.2017**
(21) Application number: 16382241.4
(22) Date of filing: 30.05.2016
(51) Int. Cl.: G02F 1/1347

(54) **ACHROMATIC LIQUID CRYSTAL VARIABLE OPTICAL RETARDER**

(71) Applicant: INTA, Instituto Nacional de Technica Aeroespacial, 28850 Torrejon de Ardoz (ES); Istituto Nazionale di Astrofisica, 10025 Pino Torinese (IT)
(72) Inventor: URIBE PATARROYO, Néstor Raúl, 28850 Torrejón de Ardoz (ES); ÁLVAREZ HERRERO, Alberto, 28850 Torrejón de Ardoz (ES); VARGAS BALBUENA, Javier, 28850 Torrejón de Ardoz (ES); RESTREPO GÓMEZ, René, 28850 Torrejón de Ardoz (ES); LÓPEZ HEREDERO, Raquel, 28850 Torrejón de Ardoz (ES); CAPOBIANCO, Gerardo, I-10025 Pino Torinese (IT); GARCÍA PAREJO, Pilar, 28850 Torrejón de Ardoz (ES); FINESCHI, Silvano, I-10025 Pino Torinese (ES)
(74) Representative: Elzaburu S.L.P.

(57) **Abstract**

Achromatic liquid crystal variable optical retarder comprising at least two liquid crystal variable optical retarders of different materials with different dispersion laws and whose optical properties are dependent on the wavelength, so that the first liquid crystal variable optical retarder and the second liquid crystal variable optical retarder are assembled with their optical axes rotated 90º to each other. The achromatic liquid crystal variable optical retarder may additionally comprise at least one fixed retarder crystal.

## Description

### Field of the invention

The present invention relates to an achromatic liquid crystal variable optical retarder, and thus is within the field of optical retarders, that is, those optical devices which introduce a retardance between a polarization and the light perpendicular polarization. It is, therefore, a device with applications in optical instruments handling the polarization of light.

### Background of the invention

For years the liquid crystal variable retarders (LCVRs) have become very common due to their advantages over the fixed retarders based on crystals.

WO 0036462 A1 discloses, amongst other objects, an achromatic compound variable retarder, based on smectic and nematic liquid crystal retarders. The third embodiment of this document discloses an achromatic compound retarder that comprises two variable retarders, the retardance of which can be switched between zero and half-wave, placed between two end retarders. These liquid crystal variable retarders may include homogeneously aligned nematic cells, nematic π cells and smectic liquid cristal retarders. The operation of said retarder is the change in orientation of the liquid crystal cells and the external fixed retarders. This document shows the calculated transmission spectrum of an obturator comprising the mentioned retarder and shows that the transmission is independent of the wavelength.

Other liquid crystal retarders have been disclosed in numerous scientific publications, for example these indicated below:
- Kohns, Peter, Jörg Schirmer, Anatoli A. Muravski, Sergei Ye. Yakovenko, Vladimir Bezborodov and Roman Dãbrowski. 1996. Birefringence measurements of liquid crystals and an application: An achromatic waveplate. Liquid Crystals. 21(6):841-846.
- Jorg Schirmer, Theodor Schmidt-Kaler, Liquid crystal phase retarder with broad spectral range, Optics Communications, Volume 176, Issues 4-6, 1 April 2000, Pages 313-317.
- Pan, Ru-Pin, Cheng-Wei Lai, Chia-Jen Lin, Cho-Fan Hsieh and Ci-Ling Pan. 2010. Achromatic Liquid Crystal Phase Plate for Short Laser Pulses. Molecular Crystals and Liquid Crystals. 527:65-71.
- Su Shen, Jun She, and Tao Tao, "Optimal design of achromatic true zero-order wave-plates using twisted nematic liquid crystal," J. Opt. Soc. Am. A 22, 961-965 (2005).
- Jun She, Su Shen and Qian Wang, "Optimal design of achromatic quarter-wave plate using twisted nematic liquid crystal cells," Optical and Quantum Electronics, Volume 37, Number 7, 625-634.
- Crescenzio, G., et al., METIS visible light relay optics concept and design, INAF-Osservatorio atronómico di Torino, Technical Report nº149.
- Harrington, D.M. et al., Achromatizing a liquid-crystal spectropolarimeter: retardance vs Stokes-based calibration of HiVIS, arXiv.org, e-Print Archive, Astrophysics, 2010, 1-17.
- Duran, V. et al., Use of principal states of polarization of a liquid crystal device to achieve a dynamical modulation of broadband beams, Optics Letters, 2009, Vol. 34, págs. 2423-2425.

In numerous applications (such as the use of polarimetry in "remote-sensing", or in applications for characterizing materials as industrial materials) it is necessary to measure the polarization properties of light at different wavelengths.

Traditional achromatic crystal retarders have a major limitation, which is that their assembly is done for a given thickness of each material, and therefore the retardance is fixed and for a range of predefined wavelengths during manufacture. Therefore, these traditional optical retarders only provide a correct retardance in a very small range of wavelengths; this occurs both in crystal retarders and in liquid crystal retarders. There are certain types of achromatic retarders, both crystal and liquid crystal ones, that correct that drawback; however, they introduce a fixed retardance (they are fixed achromatic retarders).

Furthermore, as non-achromatic liquid crystal retarders (non-achromatic LCVRs) are variable by applying a voltage, they are very useful for some applications of polarimetry, for they significantly reduce the complexity of the mechanisms required for the instruments.

### Summary of the invention

Therefore, the object of the invention is to provide an optical retarder that is both achromatic (so it is less sensitive to the change of light wavelength than normal retardants) and variable (the introduced achromatic retardance can be changed with the application of voltages), that enables the use of liquid crystal variable retarders (LCVRs) in polarimeters working with several wavelengths.

The invention relates to an achromatic liquid crystal variable optical retarder ALCVR comprising at least two liquid crystal variable optical retarders LCVRs of different materials with different dispersion laws and whose optical properties are dependent on the wavelength, so that the first liquid crystal variable optical retarder and the second liquid crystal variable optical retarder are assembled with their optical axes rotated 90º to each other.

The main advantage of the achromatic liquid crystal variable optical retarder of the invention is that it is a highly flexible device which behaves in an achromatic way in different ranges of wavelengths and with different end retardance values, so it is able to vary its working range to suit the application in which it will be used.

Other features and advantages of the present invention will become apparent from the following detailed description of an illustrative non-limiting embodiment of its object in relation to the accompanying figures.

### Brief description of the drawings

Fig. 1 shows a graph of the retardance versus voltage for a first subcell of an ALCVR of the invention.
Fig. 2 shows a graph of the retardance versus voltage for a second subcell of an ALCVR of the invention.
Fig. 3 shows a graph of the retardance versus wavelength for a first state of an ALCVR of the invention.
Fig. 4 shows a graph of the retardance versus wavelength for a second state of an ALCVR of the invention.
Fig. 5 shows a graph of the retardance versus wavelength for a third state of an ALCVR of the invention.
Fig. 6 shows a graph of the retardance versus wavelength for a fourth state of an ALCVR of the invention.

### Detailed description of the invention

The device of the invention is an achromatic liquid crystal variable optical retarder (ALCVR), and comprises two LCVRs of different materials, and with known optical properties as a function of wavelength. Such LCVRs are assembled with their axes rotated 90°, so that the retardance introduced by a LCVR is compensated by the other LCVR. By selecting appropriate voltages, extracted from a detailed model of the device and its optical properties, it is possible to achieve an achromatic response of the achromatic liquid crystal variable optical retarder in a wide range of retardances and in a variable range of wavelengths.

Similarly to the way achromatic crystal retarders work, this technology is based on the compensation of the dispersion of the birefringence as a function of wavelength. Two liquid crystals with different dispersion laws are selected, and their optical axes are arranged perpendicular so that the retardance introduced by one and the other are subtracted.

The achromatic liquid crystal variable optical retarder ALCVR of the invention may comprise two subcells as liquid crystal variable optical retarders LCVRs.

The most important advantage of the ALCVRs is that a highly flexible device is obtained, since the same ALCVR will behave in an achromatic way in different wavelength ranges, and with different end retardance values. This is possible thanks to the dependence of the retardance of each subcell on the voltage applied to it.

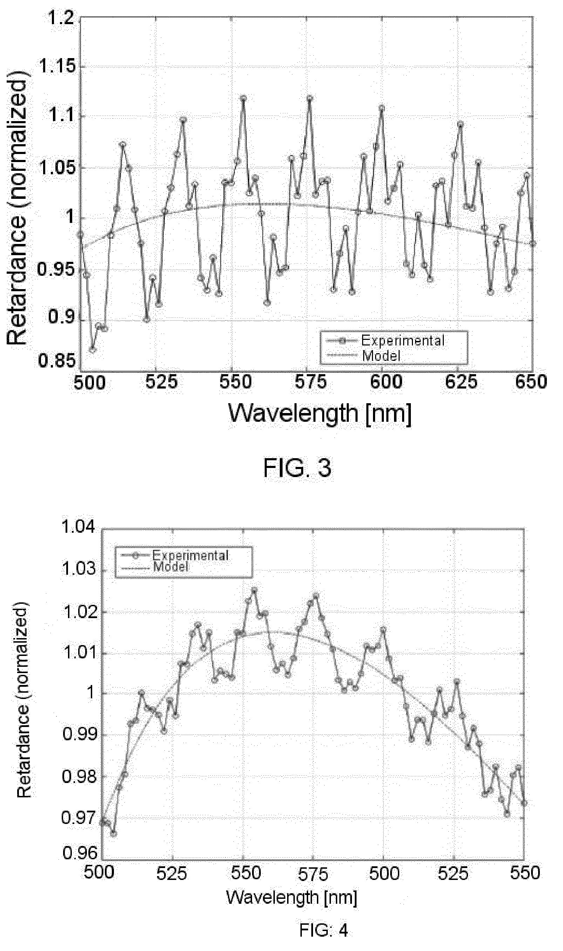

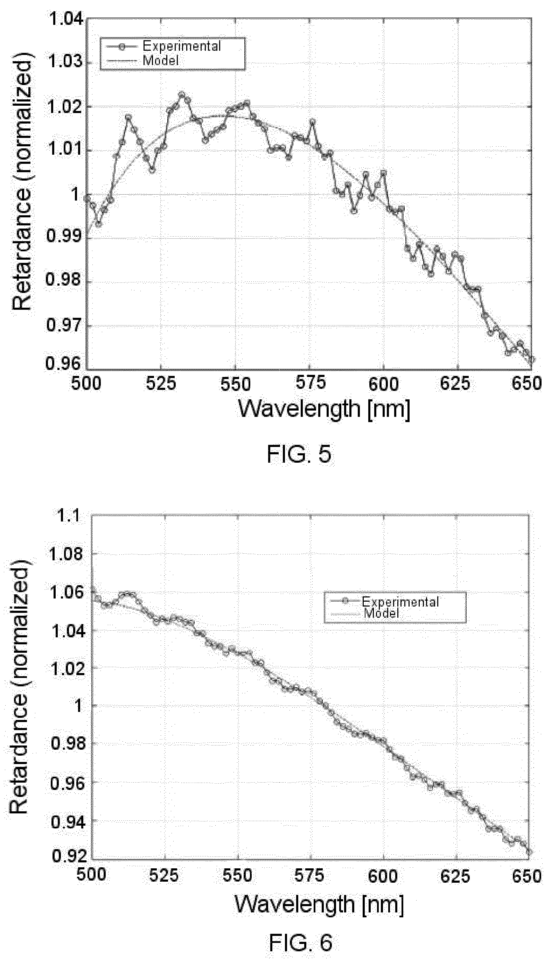

Figures 3 to 6 show graphs of the retardance as a function of wavelength for various states of an example of an ALCVR of the invention.

However, the obtention of a given achromatic retardance is not an easy task because of the many variables that are present in an ALCVR and those required for a particular application. In this device, the retardance varies as a function of the voltage of the first subcell, the voltage of the second subcell, the wavelength, the angle of incidence and temperature.

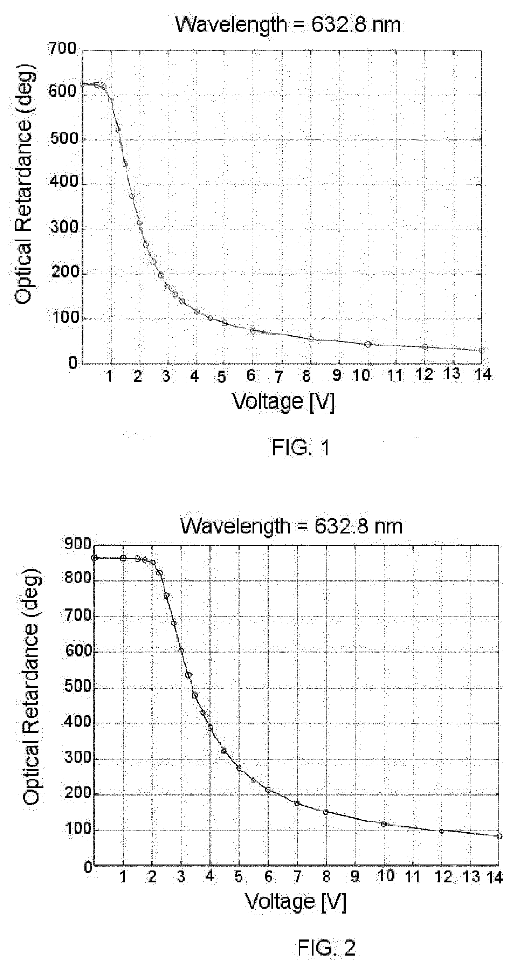

Figures 1 and 2 show graphs of the retardance versus voltage for a first subcell and for a second subcell of an example of an ALCVR of the invention.

What is done is a detailed model of each subcell, wherein the retardance is determined as a function of all parameters (wavelength, voltage, angle of incidence and temperature). For each ALCVR, a merit function that determines the achromaticity in a range of wavelengths is defined. Then, once established the requirements for a particular application (achromatic retardance δ in a determined range of wavelengths, at a certain angle of incidence and temperature) a minimization of the merit function as a function of the free parameters (voltages of each subcell) is carried out.

What is finally obtained is a highly flexible achromatic variable retarder, which can vary its operating range to suit the application in which it will be used.

Is also important to stress that one ALCVR need not be limited to two subcells. Depending on the application, the use of three or more subcells greatly improves achromaticity, and there may be combinations containing fixed retarder crystals (as fixed retarder sheets) to increase the diversity of available dispersion laws.

Although the present invention has been fully described in connection with preferred embodiments, it is apparent that modifications may be introduced within its scope, not considering this as limited by these embodiments, but by the content of the following claims.

## Claims

1. Achromatic liquid crystal variable optical retarder ALCVR comprising at least two liquid crystal variable optical retarders LCVRs of different materials with different dispersion laws and whose optical properties are dependent on the wavelength, so that the first liquid crystal variable optical retarder and the second liquid crystal variable optical retarder are assembled with their optical axes rotated 90º to each other.

2. Achromatic liquid crystal variable optical retarder ALCVR according to claim 1, comprising two subcells as liquid crystal variable optical retarders LCVRs.

3. Achromatic liquid crystal variable optical retarder ALCVR according to claim 1, addtionally comprising at least one fixed retarder crystal.
